# EUROPÄISCHE PATENTSCHRIFT

(11) **EP 1 238 751 B1**
(45) Veröffentlichungstag und Bekanntmachung des Hinweises auf die Patenterteilung: **14.01.2004**
(21) Anmeldenummer: 02004191.9
(22) Anmeldetag: 26.02.2002
(51) Int. Cl.: B23Q 1/00, B23B 31/107, B23B 31/20, B23B 31/30, B23Q 3/02

(54) **Spanneinrichtung**
Clamping device
Dispositif de serrage

(30) Priorität: 07.03.2001 DE 20104008 U
(43) Veröffentlichungstag der Anmeldung: 11.09.2002
(73) Patentinhaber: Vischer & Bolli AG, 8600 Dübendorf 1 (CH)
(72) Erfinder: Etter, Ernst, 8800 Thalwil (CH)
(74) Vertreter: Paul, Dieter-Alfred, Dipl.-Ing.

(56) Entgegenhaltungen:
- EP-A- 0 943 396
- DE-A- 4 135 418
- DE-U- 20 003 729
- US-A- 5 961 261

## Beschreibung

Die vorliegende Erfindung betrifft eine Spanneinrichtung zur Fixierung eines Einzugsbolzens an einem Maschinentisch, einer Aufspannplatte oder dergleichen mit einer Aufnahme, in die der Einzugsbolzen einsetzbar ist, und einem Spannmechanismus, um den Einzugsbolzen in der Aufnahme zu fixieren, wobei der Spannmechanismus eine Spannzange mit mehreren Spannzungen aufweist, die an ihrem einen Ende an einem in der Aufnahme angeordneten Halteelement fixiert sind und an ihrem freien Ende zwischen einer radial inneren Spannstellung und einer äußeren Freigabestellung bewegbar und durch einen Kolben in der Spannstellung arretierbar sind.

Spanneinrichtungen dieser Art sind aus der DE 200 03 729 U1 bekannt. Bei diesen Spanneinrichtungen erfolgt hier die Fixierung eines Einzugsbolzens in der Aufnahme der Spanneinrichtung durch eine Spannzange, die mehrere federnde Spannzungen aufweist, welche an ihrem einen Endbereich an einem in der Aufnahme gehaltenen Ringelement fixiert und im Bereich ihrer freien Enden unter elastischer Verformung zwischen einer radial inneren Spannstellung und einer radial äußeren Freigabestellung bewegbar sind. Zur Betätigung des Spannmechanismus ist ein Kolben vorgesehen, der durch ein Federpaket in eine untere Schließstellung gedrückt wird, in der die Spannzungen radial nach innen in ihre Spannstellung gedrückt werden, und der hydraulisch in eine obere Freigabestellung bewegbar ist, in der er die Spannzungen freigibt, so daß diese radial nach außen ausweichen können. Des weiteren besitzt der Spannmechanismus einen hydraulisch oder pneumatisch betätigbaren Öffnungskolben, der mit den Spannzungen innenseitig derart in Eingriff steht, daß die freien Enden der Spannzungen durch eine Axialbewegung des Öffnungskolbens in die Freigabestellung aufgespreizt werden können und somit der Einzugsbolzen aus der Aufnahme entnommen bzw. in diese eingesetzt werden kann.

Der bekannte Spannmechanismus hat sich in der Praxis zwar durchaus bewährt. Es wird jedoch als nachteilig angesehen, daß er einen relativ komplizierten Aufbau besitzt. Weiterhin wird zum Teil bemängelt, daß die Spanneinrichtung umständlich zu handhaben ist, da der Einzugsbolzen exakt in der Spanneinrichtung positioniert sein muß, damit der Spannmechanismus zuverlässig arbeitet.

Aufgabe der vorliegenden Erfindung ist es daher, eine Spanneinrichtung der eingangs genannten Art anzugeben, die einen einfachen Aufbau besitzt, zuverlässig arbeitet und einfach zu handhaben ist.

Diese Aufgabe ist erfindungsgemäß dadurch gelöst, daß das Halteelement mit den Spannzungen axial verschiebbar und mit radialem Spiel in der Aufnahme angeordnet ist. Durch diese radial schwimmende und axial verschiebbare Anordnung der Spannzange können nicht nur Haltekräfte, sondern auch große Einzugskräfte übertragen werden. Außerdem können Fertigungsfehler ausgeglichen werden, so daß eine zuverlässige Funktion gewährleistet ist.

In Ausgestaltung der Erfindung ist vorgesehen, daß die Spannzungen in ihrer Ausgangsstellung die Spannstellung einnehmen, in der sie in Kontakt mit einer Anlagefläche eines in die Spanneinrichtung eingesetzten Einzugsbolzens stehen, wobei die Anlagefläche im Übergangsbereich zu einem verdickten Bolzenkopf vorgesehen ist. Durch diese Ausgestaltung wird erreicht, daß die Spanneinrichtung keinen separaten Öffnungsmechanismus benötigt, da der mit einer entsprechenden Kontur versehene Einzugsbolzen die Spannzungen radial nach außen drückt, wenn der Einzugsbolzen aus der Aufnahme gezogen bzw. in diese eingesetzt wird.

Schließlich ist in an sich bekannter Weise vorgesehen, daß die Spannzungen im Bereich ihrer freien Enden außenseitig konusförmig auseinanderlaufen, wobei sie an ihren Außenseiten Schrägflächen bilden, die mit einer am Kolben angearbeiteten Konusfläche zusammenwirken, um die Spannzungen radial nach innen gegen einen in die Aufnahme eingesetzten Einzugsbolzen zu drücken, wenn sich der Kolben in seiner Spannstellung befindet. Hierdurch wird erreicht, daß beim Spannvorgang die in den Kolben eingearbeitete Konuskontur eine Axialbewegung des Kolbens in eine axiale und radiale Spannbewegung der Spannzungen umsetzt. Der Spannbolzen wird beim Einfahren durch die Vorspannung der Spannzungen leicht gehalten und danach beim Spannvorgang in den Zylinder eingezogen.

Hinsichtlich weiterer vorteilhafter Ausgestaltungen der Erfindung wird auf die Unteransprüche sowie die nachfolgende Erläuterung von Ausführungsbeispielen unter Bezugnahme auf die beiliegende Zeichnung verwiesen. In der Zeichnung zeigt:
- Fig. 1: eine als Aufbauzylinder ausgebildete Spanneinrichtung gemäß der vorliegenden Erfindung in perspektivischer Ansicht,
- Fig. 2: die Spanneinrichtung aus Fig. 1 im Schnitt entlang der Linie II-II mit betätigtem Spannmechanismus und
- Fig. 3: eine als Einbauzylinder ausgebildete Spanneinrichtung gemäß der vorliegenden Erfindung in einem der Fig. 2 entsprechenden Längsschnitt mit gelöstem Spannmechanismus.

In den Figuren sind zwei Varianten einer mechanisch/hydraulischen Spanneinrichtung 1 gemäß der vorliegenden Erfindung dargestellt, die beispielsweise dazu dient, eine Trägerpalette mit einem daran befestigten Werkstück und daran rückseitig vorgesehenen Einzugsbolzen an einem Maschinentisch, einer Grundplatte oder dergleichen festzuspannen. Die beiden gezeigten Spanneinrichtungen 1 besitzen im wesentlichen den gleichen Grundaufbau und die gleiche Funktionsweise, wie sie nachfolgend beschrieben sind:

Die Spanneinrichtungen 1 umfassen jeweils einen Grundkörper 2, der eine Zylinderbohrung 3 bildet, in die unter Bildung eines Druckraums 4 ein Kolben 5 axial bewegbar eingesetzt ist. In den Druckraum 4 mündet bodenseitig ein im Grundkörper 2 ausgebildeter Kanal 2b, durch welchen dem Druckraum 4 ein Hydraulikmittel zugeführt werden kann.

Die offene Oberseite des Grundkörpers 2 ist durch einen Deckel 6 verschlossen, der auf einem Flansch 2a des Grundkörpers 2 aufliegt und an dem Grundkörper 2 durch sechs Schrauben 7 fixiert ist. An der Deckelunterseite ist ein Zentrieransatz 8 ausgebildet, der passgenau zum Durchmesser der Zylinderbohrung 3 dimensioniert ist, so daß der Deckel 6 an dem Grundkörper 2 lagegenau positioniert werden kann. Zwischen dem Deckel 6 und dem Kolben 5 ist ein Tellerfederpaket 9 angeordnet, das den Kolben 5 in Richtung des Bodens der Zylinderbohrung 3 nach unten beaufschlagt.

In der dem Druckraum 4 gegenüber liegenden Oberseite des Kolbens 5 ist eine Sackbohrung vorgesehen, die eine Aufnahme 10 für einen Einzugsbolzen 11 bildet, der in die Aufnahme 10 durch eine im Deckel 6 vorgesehene Durchgangsbohrung 12 eingesetzt werden kann.

Zur Fixierung des Einzugsbolzens 11 in der Aufnahme 10 ist ein Spannmechanismus vorgesehen, der durch Axialbewegung des Kolbens 5 betätigbar ist und eine Spannzange aufweist. Diese Spannzange besitzt mehrere entlang des Umfangs der Aufnahme 10 angeordnete und zungenartig ausgebildete Spannelemente 13, die an ihrem oberen Ende an einem Haltering 14 gehalten sind, wobei die Spannzungen 13 im Bereich ihrer freien Enden elastisch aufgespreizt bzw. zusammen gedrückt werden können. Der Haltering 14 ist in die Durchgangsbohrung 12 des Deckels 6 eingesetzt und dort axial verschiebbar und mit radialem Spiel (schwimmend) gehalten, wobei der axiale Weg nach oben hin durch einen am Deckel 6 fixierten Sprengring 15 begrenzt ist.

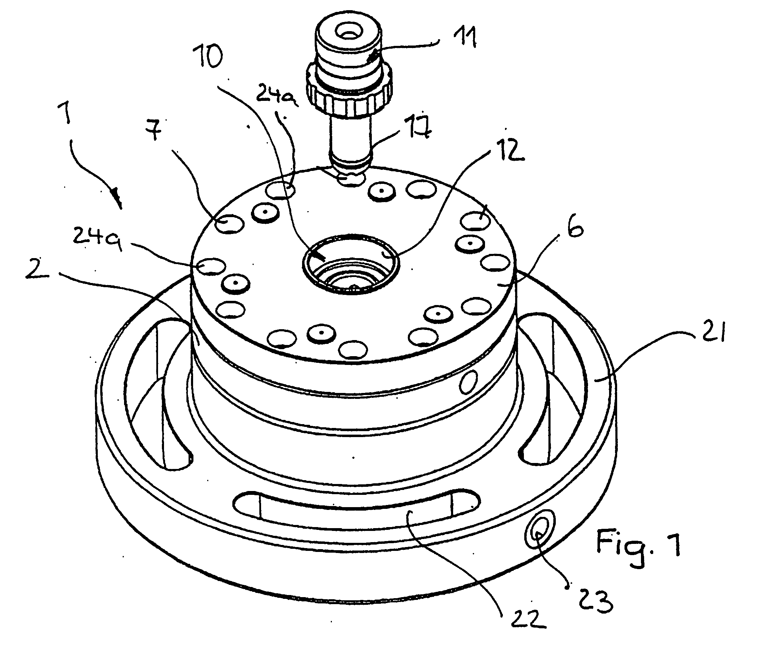

Im Bereich ihrer freien, unteren Enden weisen die Spannzungen 13 Eingriffsnasen 16 auf, die in ihrer in Figur 1 dargestellten Ausgangslage in Kontakt mit einem in die Spanneinrichtung 1 eingesetzten Einzugsbolzen 11 stehen, um diesen in der Aufnahme 10 zu arretieren. An dem Einzugsbolzen 11 ist eine entsprechende Anlagefläche 17 im Übergangsbereich zum verdickten Bolzenkopf 11a vorgesehen, über welche die axiale Fixierung erfolgt.

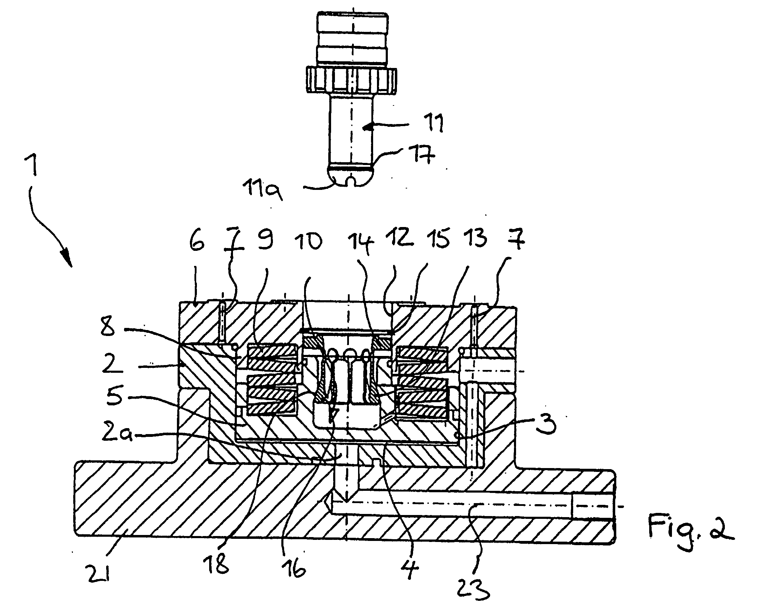

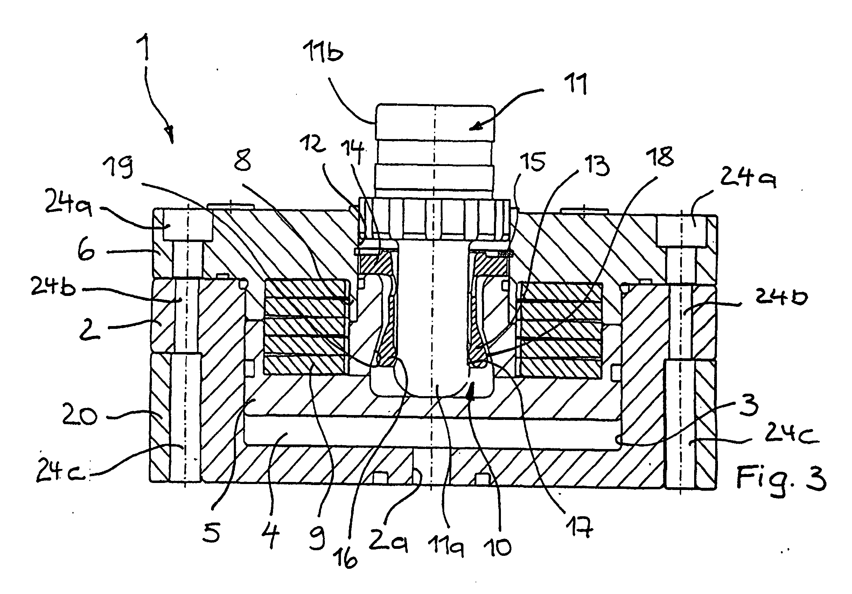

Wie in der Zeichnung gut erkennbar ist, laufen die Spannzungen 13 im Bereich ihrer freien Enden außenseitig konusartig auseinander, wobei sie an ihren Außenseiten Schrägflächen 18 bilden. Diese Schrägflächen 18 wirken mit einer am Kolben 5 angearbeiteten Konusfläche 19 zusammen, um die Spannzungen 13 in ihrer Ausgangsstellung radial nach innen gegen einen in die Aufnahme 10 eingesetzten Einzugsbolzen 11 zu drücken, wenn der Kolben 5 aus seiner in Figur 3 dargestellten oberen Freigabestellung nach unten hin in die in Figur 2 dargestellte untere Spannstellung bewegt wird.

Konkret zeigt die Figur 3 die Spanneinrichtung 1 in ihrer Freigabestellung, in welcher der Kolben 5 durch Beaufschlagung des Druckraums 4 mit einem Druckmedium entgegen der Rückstellkraft des Tellerfederpakets 9 angehoben ist, so daß der Haltering 14 zwischen dem Sprengring 15 und dem Kolben 5 axial fixiert ist. In dieser Freigabestellung stehen die Konusfläche 19 des Kolbens 5 und die Schrägflächen 18 der Spannzungen 13 nicht in Eingriff miteinander, so daß die Spannzungen 13 beim Einsetzen eines Einzugsbolzens 11 in die Aufnahme 10 bzw. beim Herausziehen eines Einzugsbolzens 11 aus der Aufnahme 10 elastisch nach außen ausweichen können, wenn der verdickte Bolzenkopf 11a zwischen den Spannzungen 13 durchgeführt wird. Beim Einsetzvorgang verhindern der lange Führungsbund 11b des Einzugsbolzens 11 und die entsprechend lang ausgebildete Durchgangsbohrung 12 des Deckels 6 ein Abkippen bzw. Weggleiten des Einzugsbolzens 11 aus der Führung, was besonders wichtig bei automatisierten Fertigungen ist. Wenn jetzt der Druckraum 4 entlastet wird, drückt das Tellerfederpaket 9 den Kolben 5 nach unten. Dabei kommt seine Konusfläche 19 in Kontakt mit den Schrägflächen 18 der Spannzungen 13, so daß diese durch den Kolben 5 an einem Ausweichen nach außen gehindert werden und damit der Einzugsbolzen 11 sicher fixiert wird. Bei der weiteren Niederbewegung wird die gesamte Spannzange mit dem Einzugsbolzen 11 in die Spanneinrichtung 1 eingezogen.

Wenn der Druckraum 4 wieder mit einem Hydraulikmittel beaufschlagt wird, wird zunächst der Kolben 5 allein axial nach oben bewegt, so daß die Konusfläche 19 und die Schrägflächen 18 außer Eingriff voneinander kommen. Nach einer gewissen Strecke kommt der Kolben 5 dann im Bodenbereich der Aufnahme 10 in Kontakt mit dem Bolzenkopf 11a, so daß dieser ebenfalls angehoben wird. In der in Figur 3 dargestellten Freigabestellung kann dann der Einzugsbolzen 11 aus der Aufnahme 10 entfernt werden, wobei die Spannzungen 13 elastisch leicht aufgespreizt werden, um den Weg für den dickeren Bolzenkopf 11a freizugeben.

In der in Figur 3 dargestellten Ausführungsform ist die Spanneinrichtung 1 als sogenannte Einbaukassette ausgebildet, die in eine Ausnehmung eines Maschinentisches oder dergleichen eingesetzt werden kann. Bei dieser Ausführungsform ist ein Zwischenring 20 auf den Grundkörper 2 von der dem Flansch 2a gegenüberliegenden Seite her aufgeschoben, dessen Außendurchmesser etwa dem Außendurchmesser des Grundkörperflansches 2a entspricht, so daß die Spanneinrichtung 1 eine kompakte Zylinderform erhält. Außerdem ist der Außenrand des Deckels 6 als Zentrierfläche ausgebildet, über welche die Spanneinrichtung 1 in der Maschinentischausnehmung zentriert werden kann. Die Fixierung der Spanneinrichtung 1 am Maschinentisch erfolgt bei dieser Ausführungsform mittels sechs Durchgangsschrauben, die im Wechsel zu den Schrauben 7, mit denen der Deckel 6 am Grundkörper 2 befestigt ist, vorgesehen sind, den Deckel 6, den Grundkörper 2 und den Zwischenring 20 axial durchgreifen, wozu Druchgangsbohrungen 24a, 24b, 24c in den Bauteilen vorgesehen sind, und in den Maschinentisch eingeschraubt sind.

Die in den Figuren 1 und 2 dargestellte Spanneinrichtung ist dagegen als sogenannter Aufbauzylinder ausgebildet, der auf einem Maschinentisch oder dergleichen anzubringen ist. Hierzu weist die Spanneinrichtung 1 anstelle eines Zwischenringes 20 einen Befestigungsflansch 21 auf, der, wie insbesondere in Figur 1 gut erkennbar ist, vier in Umfangsrichtung verlaufende Langlöcher 22 aufweist, über welche die Spanneinrichtung 1 am Maschinentisch festgeschraubt werden kann. Bei dieser Ausführungsform ist in dem Befestigungsflansch 21 auch ein Fluidkanal 23 ausgebildet, über welchen dem Druckraum 4 Hydraulikmittel zugeführt werden kann.

Die Fixierung des Befestigungsflansches 21 am Grundkörper 2 erfolgt wie bei der Einbaukassette mittels sechs Durchgangsschrauben, die im Wechsel zu den Schrauben 7, mit denen der Deckel 6 am Grundkörper 2 befestigt ist, vorgesehen sind und die die Durchgangsbohrungen 24a, 24b im Deckel 6 und im Grundkörper 2 durchgreifen und in den Befestigungsflansch 21 eingeschraubt sind. Die Anordnung ist dabei so getroffen, daß der Befestigungsflansch 21 des Aufbauzylinders ohne weiteres gegen den Zwischenring 20 der Einbaukassette ausgetauscht werden kann und somit die erfindungsgemäße Spanneinrichtung wahlweise als Einbaukassette oder als Aufbauzylinder eingesetzt werden kann.

## Patentansprüche

1. Spanneinrichtung zur Fixierung eines Einzugsbolzens (11) an einem Maschinentisch, einer Aufspannplatte oder dergleichen mit einer Aufnahme (10), in die der Einzugsbolzen (11) einsetzbar ist, und einem Spannmechanismus, um den Einzugsbolzen (11) in der Aufnahme (10) zu fixieren, wobei der Spannmechanismus eine Spannzange mit mehreren Spannzungen (13) aufweist, die an ihrem einen Ende an einem in der Aufnahme (10) angeordneten Halteelement (14) fixiert sind und an ihrem freien Ende zwischen einer radial inneren Spannstellung und einer äußeren Freigabestellung bewegbar und durch einen Kolben (5) in der Spannstellung arretierbar sind, **dadurch gekennzeichnet, daß** das Halteelement (14) mit den Spannzungen (13) axial verschiebbar und mit radialem Spiel in der Aufnahme (10) angeordnet ist.

2. Spanneinrichtung nach Anspruch 1, **dadurch gekennzeichnet, daß** die Spannzungen (13) in ihrer Ausgangsstellung die Spannstellung einnehmen, in der sie in Kontakt mit einer Anlagefläche (17) eines in die Spanneinrichtung eingesetzten Einzugsbolzens (11) stehen, wobei die Anlagefläche (17) im Übergangsbereich zu einem verdickten Bolzenkopf (11a) vorgesehen ist.

3. Spanneinrichtung nach Anspruch 1 oder 2, **dadurch gekennzeichnet, daß** die Spannzungen (13) im Bereich ihrer freien Enden außenseitig konusförmig auseinanderlaufen, wobei sie an ihren Außenseiten Schrägflächen (18) bilden, die mit einer am Kolben (5) angearbeiteten Konusfläche (19) zusammenwirken, um die Spannzungen (13) radial nach innen gegen einen in die Aufnahme (10) eingesetzten Einzugsbolzen (11) zu drücken, wenn sich der Kolben (5) in seiner Spannstellung befindet.

## Claims

1. Clamping device for securing a draw-in nipple (11) on a machine table, a clamping plate or the like having a receptacle (10), into which the draw-in nipple (11) is insertable, and a clamping mechanism in order to lock the draw-in nipple (11) in the receptacle (10), the clamping mechanism comprising a draw-in collet with several clamping-tongues (13), that at their one end are fixed to a holding element (14) arranged in the receptacle (10) and at their free end are movable between a radially inner clamping position and a radially outer releasing position and are arrestable in the clamping position by means of a piston (5) **characterized in that** the holding element (14) with the clamping-tongues (13) is arranged in the receptacle (10) axially displacably and with radial play.

2. Clamping device according to claim 1, **characterized in that** the clamping-tongues (13) in their initial position are in their clamping position, in which they are in contact with a bearing surface (17) of a draw-in nipple (11) inserted into the clamping device, the bearing surface (17) being provided in a transition region to a thickened bolt head (11a).

3. Clamping device according to claim 1 or 2, **characterized in that** the clamping-tongues (13) at their free ends conically diverge on their exterior side forming oblique surfaces (18) on their exterior faces, which co-act with a conical surface (19) formed on the piston (5) for pressing the clamping-tongues (13) radially inwardly against a draw-in nipple (11) inserted into the receptacle (10), when the piston (15) is in its clamping position.

## Revendications

1. Dispositif de serrage pour fixer un boulon de tension (11) à une table de machi-nes, une plaque de serrage ou quelque chose de similaire avec une réception (10) dans laquelle il est possible d'installer un boulon de tension (11) et avec un mécanisme de serrage afin de fixer le boulon de tension (11) dans la réception (10) ; le mécanisme de serrage présentant une pince de serrage avec plusieurs languettes (13) qui sont fixés sur une de leurs extrémités à un élément de fixation (14) disposé dans la réception (10) et qui sont susceptibles d'être bougées sur leur extrémité libre entre une position de serrage radialement à l'intérieur et une position de libération extérieure et sont susceptibles d'être arrêtées par un piston (5) dans la position de serrage, **caractérisé en ce que** l'élément de fixation (14) peut être coulissé de façon axiale avec les languettes de serrage (13) et est disposé dans la réception (10) avec un jeu radial.

2. Dispositif de serrage selon la revendication 1, **caractérisé en ce que** les languettes de serrage (13) prennent dans leur position de départ la position de serrage dans laquelle ils se trouvent en contact avec une surface d'appui (17) d'un boulon de tension (11) installé dans le dispositif de serrage; la surface d'appui (17) étant prévue dans la zone de transition vers une tête de boulon (11a) épaissie.

3. Dispositif de serrage selon la revendication 1 ou 2, **caractérisé en ce que** les lan-guettes de serrage (12) s'écartent dans la zone de leurs extrémités libres du côté extérieur et sous la forme de cône; lesquelles languettes forment des surfaces en biais (18) sur leurs côté extérieurs qui coopèrent avec une des surfaces de cône (19) façonnés sur le piston afin de presser les languettes de serrage (10) de façon radiale vers l'intérieur vers un boulon de tension (11) installé dans la réception (10), lorsque le piston (5) se trouve dans sa position de serrage.
